# EUROPEAN PATENT SPECIFICATION

(11) **EP 2 095 519 B1**
(45) Date of publication and mention of the grant of the patent: **06.07.2011**
(21) Application number: 07827021.2
(22) Date of filing: 08.11.2007
(51) Int. Cl.: H04B 1/20, G08C 23/04

(54) **A SYSTEM FOR CONTROLLING ELECTRICAL AND/OR ELECTRONIC DEVICES AND EQUIPMENTS DISTRIBUTED IN AN ENVIRONMENT, PARTICULARLY A DOMESTIC ENVIRONMENT**
SYSTEM ZUR STEUERUNG VON ELEKTRISCHEN UND/ODER ELEKTRONISCHEN EINRICHTUNGEN UND GERÄTEN, DIE IN EINER UMGEBUNG, INSBESONDERE EINER HÄUSLICHEN UMGEBUNG, VERTEILT SIND
SYSTÈME POUR COMMANDER DES DISPOSITIFS ÉLECTRIQUES ET/OU ÉLECTRONIQUES ET ÉQUIPEMENTS DISTRIBUÉS DANS UN ENVIRONNEMENT, EN PARTICULIER UN ENVIRONNEMENT DOMESTIQUE

(30) Priority: 09.11.2006 IT TO20060799
(43) Date of publication of application: 02.09.2009
(73) Proprietor: Tarizzo, Enzo, 10083 Favria Canavese (TO) (IT)
(72) Inventor: Tarizzo, Enzo, 10083 Favria Canavese (TO) (IT)
(74) Representative: Deambrogi, Edgardo
(86) International application number: PCT/IB2007/054537
(87) International publication number: WO 2008/056332

(56) References cited:
- EP-A- 1 061 490
- EP-A- 1 237 250
- DE-C1- 19 717 089
- US-A1- 2003 073 461

## Description

The present invention relates to a remote control system for electrical, electromechanical or electronic equipment and devices distributed in an environment, in particular in a domestic environment.

In the field of domestics, home automation systems for the centralized control of entertainment devices distributed in a domestic environment are becoming increasingly widespread.

Centralized control systems for multimedia devices or entertainment equipment distributed in several rooms in a domestic environment and interconnected via a LAN are known in the art. Audio/video signals output by a source device, for example a CD/DVD player or a television receiver, are sent selectively to some broadcast devices (loudspeakers, screens) preselected by the user via a remote control. Typically this takes place through a hub or similar switching devices, able to interpret signals coming from a source and to forward them to the selected broadcast device. A prior art system of this kind is disclosed in DE-197 17 089 C.

In view of the growing complexity of such systems, and particularly in view of the ever increasing number of electrical or electronic devices and equipment installed in a domestic environment, it is desirable to separate out and distribute the associated input and output devices while continuing to control them in a simplified manner. Furthermore, it is desirable to integrate such a centralized control - i.e. one which can be operated from every room in an environment (for example a domestic, work or entertainment environment), and if necessary even from neighbouring open spaces - both in multimedia systems, such as for example hi-fi units, audio/video players and television equipment, and in electrical systems distributed in the environment.

So as not to be forced to modify the configuration of a domestic electrical system (light switches, television antenna sockets, etc.), which would require the intervention of a specialized technician, whenever it is desired to redistribute or arrange differently the equipment and devices in use, it would surely be more efficient to set up a centralized control, for example housed in a dedicated room, and to separate out only the respective input and output devices of the equipment.

Advantageously, by being able to rely on their being distributed in an area designed for the purpose, this setup would also have the effect of eliminating problems of interference and disturbances between the domestic equipment items.

The aim of the present invention is to provide a remote control system for electrical, electromechanical or electronic items of equipment and devices distributed in an environment, for controlling every type of equipment or device present in the environment, while at the same time avoiding an increase in the complexity of the user control interface and ensuring that the system is expandable, as well as ensuring that the system can be configured simply and quickly.

According to the present invention, this aim is achieved by virtue of a remote control system exhibiting the features referred to in Claim 1.

Particular embodiments of the invention form subjects of the dependent claims.

Other features and advantages of the invention will be explained in more detail in the following detailed description of one of its embodiments, which is given by way of non-limiting example, with reference to the appended drawings in which:

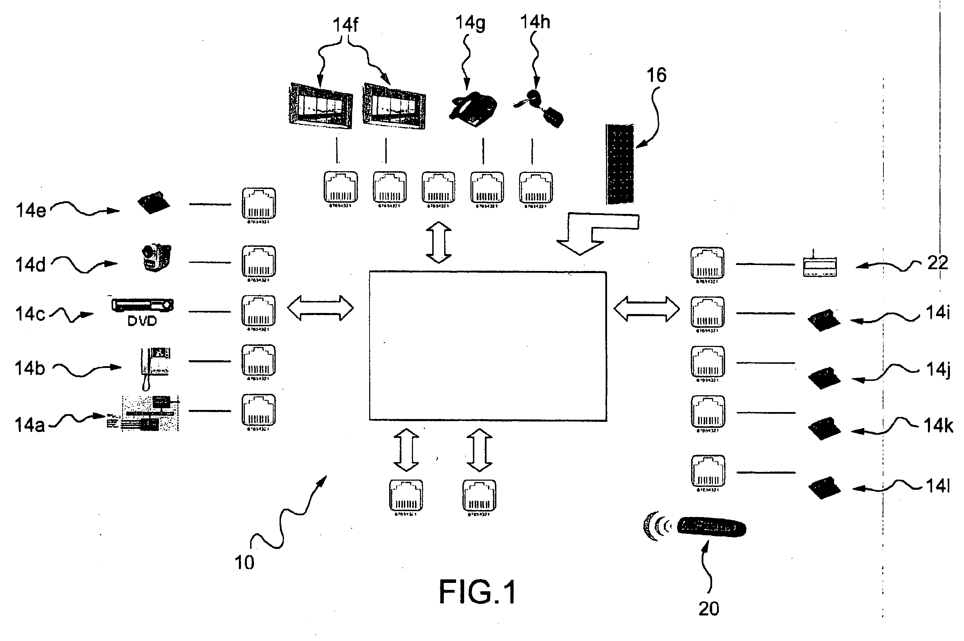

Figure 1 shows a schematic representation of an architecture of the system according to the invention;
Figure 2 shows a schematic representation in block-diagram form of a central management unit of the system of Figure 1;
Figure 3a is a diagram of the sequence of operations involved in the operation of the system according to the invention;
Figure 3b is a schematic representation of an environment in which the system according to the invention is placed;
Figure 4 is a general functional diagram of the system according to the invention; and
Figures 5-9 are other detail functional diagrams of the system according to the invention.

A remote control system for electrical, electromechanical or electronic equipment and devices distributed in an environment, in particular a domestic environment, is generally indicated with 10.

A single electrical, electromechanical or electronic device or equipment to be controlled, or a group of devices or equipments to be controlled, will from now on be generically identified, for the sake of simplicity, as an "I/O device".

The system comprises a central management unit 12 arranged to control a plurality of I/O devices 14 according to commands set by a user.

By way of example, numerals 14a-141 indicate I/O devices conventionally accommodated in a domestic environment, and which are able to be controlled by the system according to the invention. They include a 4-channel MPEG board for video surveillance 14a, one or more video entry phone terminals 14b, one or more multimedia recording media (CD/DVD) playback devices 14c, one or more shooting devices such as video cameras and the like 14d, one or more interface modules 14e, for example for converting electrical and/or data connections from RJ45 or optical fibre connection to USB, FireWire, etc., a plurality of television monitors or equipment 14f, one or more telephone sets 14g, one or more MP3 players 14h, and a series of electrical load control modules, such as relay control modules 14i, I/O modules 14j, adapted to reveal asynchronously the state of an input signal or to activate/deactivate an output device on receiving a driving command for the device, an entry phone call signalling management module 14k, a plurality of modules for controlling lights and lighting equipment in general 141 or, similarly, a DMX control unit for controlling the lighting of rooms in the environment according to programmed and, if necessary, variable lighting scenarios.

Each apparatus or device 14a 141 is electrically connected to the central management unit 12 via network connections, for example of the RJ 45 type, Cat 5e UTP cables, optical fibres and SCS, X10, EIB/KNX, ModBus, NMEA, SeaTalk, DMX, DALI communication buses (and associated protocols). Preferably, the electrical connection of the I/O device with the central management unit is adapted to ensure that n channels can be configured at the same time at a guaranteed and real-time bandwidth of at least 100 Mbit/s, which if necessary can be increased.

The devices and equipment can be distributed at a distance from the central management unit of typically 100 metres for UTP cables and 2-3 km for fibre cables, which distance if necessary can be increased by means of signal repeaters.

The central management unit 12 is powered, as is conventionally known, by the electrical power network of the environment, or by alternative power sources, for example via solar cells 16.

With each I/O device 14a-141 there is associated at least one identification device 18, which includes a memory module for storing an identification code assigned to the I/O device to be controlled. The identification device 18 is able to transmit the abovementioned identification code to a universal remote control device (from now on referred to more briefly as a remote control) 20 over a first communication link L₁, implemented as a directional communication link, for example an infrared link.

Preferably, the identification device 18 is arranged to transmit its own identification code in response to a query signal transmitted by the remote control 20, still over the first directional communication link (L₁).

The remote control 20 in turn comprises means for querying identification devices 18 in an environment, means for receiving the identification code transmitted by a queried identification device 18, and means for transmitting a complex command signal to the central management unit 12 via a second communication link L₂, implemented as an omnidirectional communication link, for example a radiofrequency link.

The management unit 12 is connected to a transmitter receiver module 22 which acts as a bridge/repeater on the communication between the remote control and the central unit. If necessary, more transmitter-receiver modules 22 can be provided and distributed in the environment, effectively extending the range of the system.

The remote control 20 comprises a user interface with keypad, preferably simplified, including universal control buttons, among which there are at least one two-state (ON/OFF) control button and at least two keys for the sequential selection in a list of available functions, in opposite scrolling directions. Typically there are provided, depending on the commands required by the I/O devices to be controlled, two PREVIOUS/NEXT sequential selection keys, two UP/DOWN sequential selection keys and one SLIDER key, the significance of which will become clear with reference to the example embodiments presented later.

The remote control also includes means for authorizing a user, which means are adapted to acquire an access code or other data for recognizing a user subject, for example in the form of data representing biometric characteristics of the user such as a fingerprint.

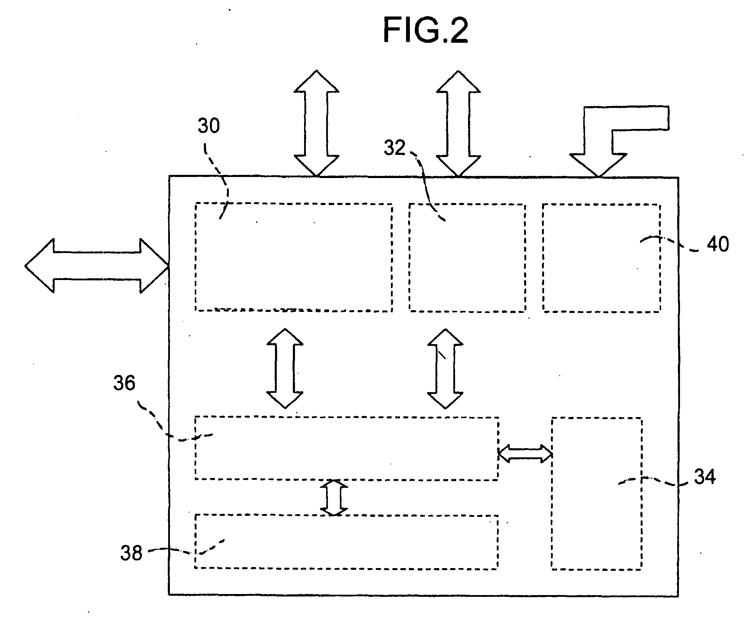

With reference to Figure 2, the central management unit 12 comprises an interconnection matrix 30 able to place two I/O devices distributed in the environment in communication with each other by configuring a temporary point-to-point communication channel enabling data to flow in both directions.

The interconnection matrix 30 is able to transfer in full-duplex mode digital information (for example, MPEG, MP3, VoIP, etc.) coded on the IP protocol simultaneously to other channels that are subsequently selected and linked, guaranteeing for each of them both the bandwidth (for example, 100 Mbit/s, 1 Gbit/s, etc.), and the packet sorting (sequence) and timing.

It also comprises a network switching module 32, adapted to selectively connect one or more modules for driving electrical devices or equipment distributed in the environment.

The central management unit 12 also comprises a memory module 34, for example an EEPROM or Flash type memory, for storing identification codes of I/O devices to be -controlled and associated interpretation criteria for the universal commands that can be selected by the user via the keypad interface of the remote control 20.

A microprocessor-based processing module 36 forms the intelligent aspect of system and it is arranged to receive the complex command signals transmitted by the remote control 20, to activate the connection between I/O devices in the environment by controlling the interconnection matrix 30, or to activate/deactivate other I/O devices by controlling the network switching module 32. The processing module 36 is also arranged for read or write access to the memory module 34, for example for interpreting universal commands selected by means of the remote control 20, or for configuring (and if necessary reconfiguring) the I/O devices to be controlled.

The management unit 12 is completed by a web/ftp server module 38, which enables the system configuration to be modified remotely, and which is adapted to make a common memory space available, for example via connections to a LAN or to an external hard disc (HDU) or pen drive.

Finally, the management unit 12 is powered by solar cells 16 with a back-up circuit via a power supply module generally indicated with 40.

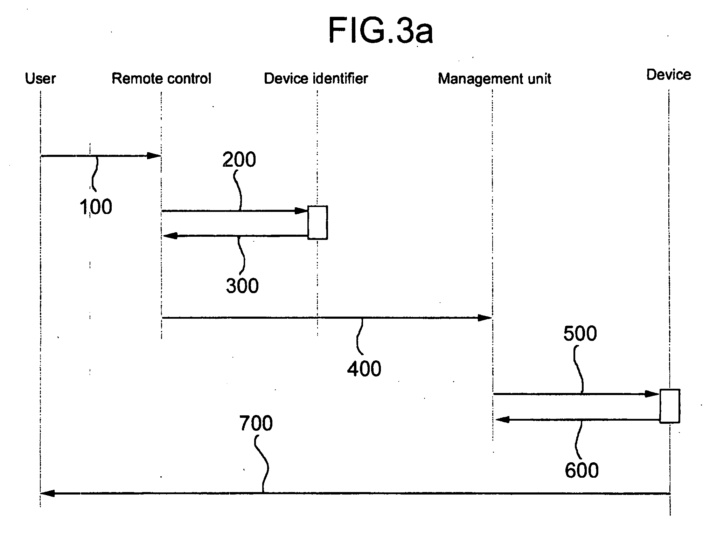

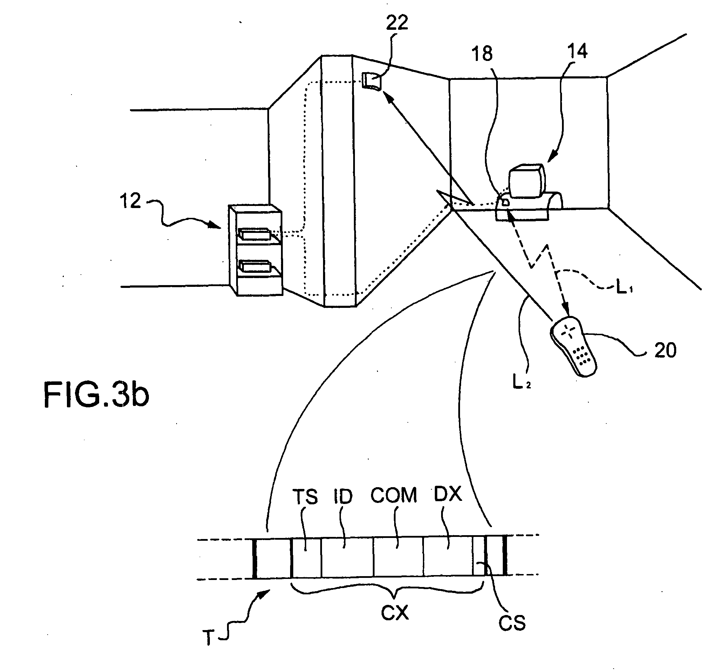

The operation of the system according to the invention can be understood from the diagram of Figure 3a, which shows the main actions executed by the components of the system.

In general, a user who wants to control an I/O device belonging to the system sets up an action request 100 on the remote control 20 via the simplified interface described above, orienting the remote control towards the identification device 18 associated with the I/O device 14 that the user intends to control.

This association can be physical, i.e. the identification device 18 can be applied to, integrated with or simply placed beside the I/O device 14 to be controlled, but it can also be by analogy, i.e. the identification device 18 can be arranged in other areas of-the environment or of a room, which by analogy are related with the functions of the I/O device 14 with which it is associated.

Following the action request 100 by the user, the remote control 20 transmits a query signal to the identification device pointed at (200), after which it receives (300) an identification code ID assigned to the I/O device 14 to be controlled. Then, the remote control forwards (400) to the central management unit 12 a complex command signal CX comprising the abovementioned received identification code ID and a command code COM indicating one of a plurality of predetermined universal commands that can be selected via its keypad interface.

In the preferred embodiment the complex command signal also comprises user recognition data DX acquired through the authentication means which the remote control is equipped with.

Advantageously, the complex command signal CX is transmitted in encrypted form, the remote control comprising means for the cryptographic encoding of the signal according to a pre-assigned encrypting code which is unique for each environment. In this way any interference between neighbouring environments, but concerning different remote control systems, is avoided.

The encrypted action request signal is then received at the management unit 12 where it is resolved (500) into a command for actuating the I/O device 14 to be controlled, which returns (600) an operation executed signal to the management unit 12, indicating to the user (700) its action executed state.

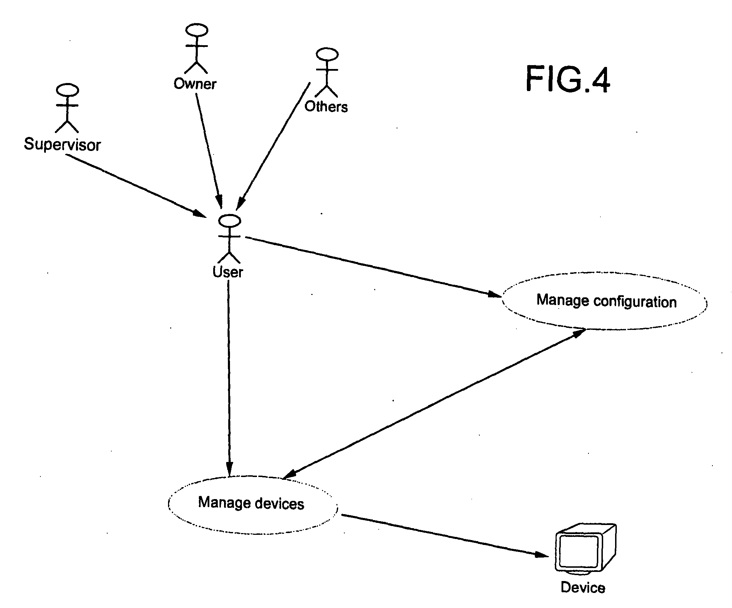

The functionalities of the abovementioned system will now be examined in greater detail with reference to Figures 4-9.

Figure 4 schematically shows a functional diagram of the system and of the operators with whom it can interact.

From now on in the description, the term "user" will be used to identify any authorized user, generally the owner of the system, other authorized subjects, for example family members or domestic staff who need to make use of the I/O devices in the environment or of one subset thereof, and where necessary a supervisor subject, such as for example a system administrator.

The user can manage the devices, by acting on an I/O device selected via the remote control, or manage the system configuration, in order to configure the functions that can be executed by the remote control or the system setup, for example in the case of adding, permanently removing or replacing devices or equipment connected to the management unit 12.

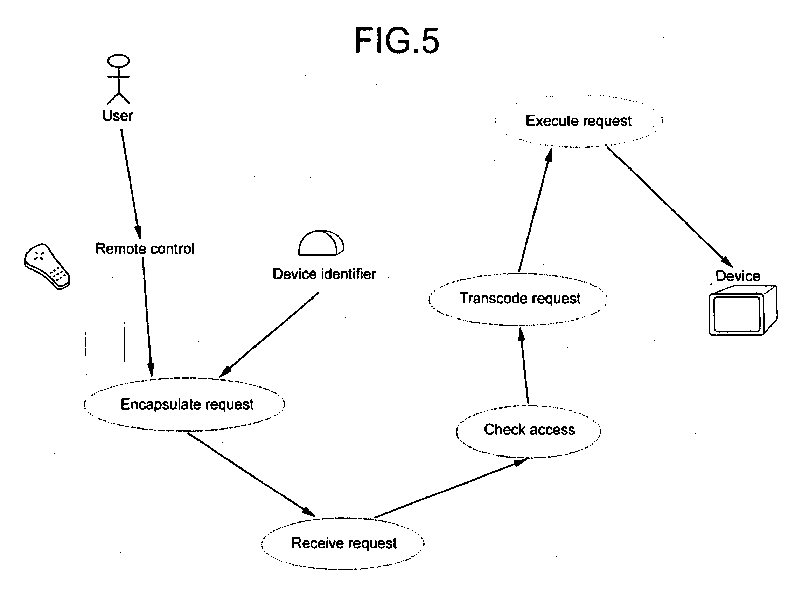

With reference to the chart in Figure 5, a user, by pressing one or more keys on the remote control 20, generates an activation request for a desired I/O device 14.

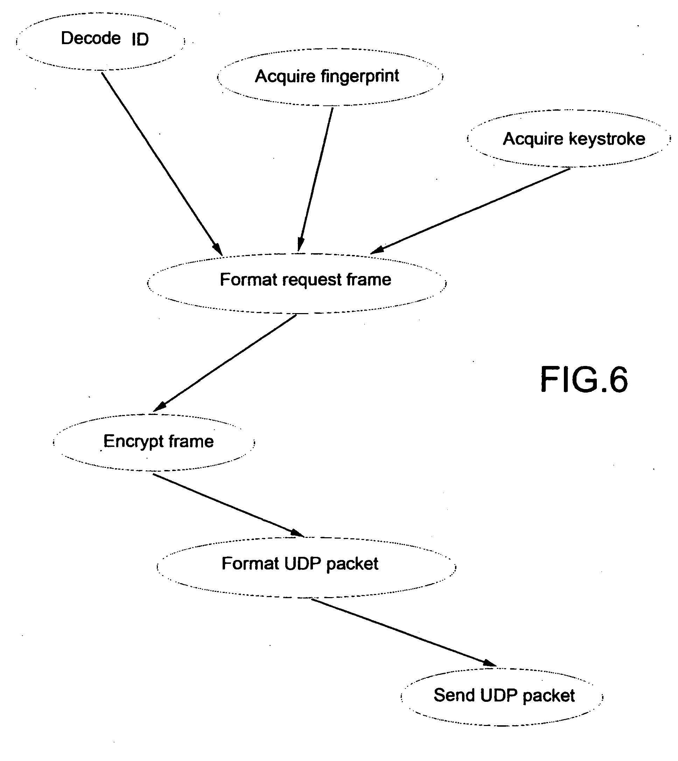

The activation request is formed in a "request encapsulation" operation, shown in detail in Figure 6, through which the complex command signal CX, which can be directed to the central management unit 12, is constructed.

A frame T of the complex command signal includes the identification code ID of the I/O device 14 to be controlled, which is received via a decoding phase comprising the acquisition, following a query, of the identification code ID stored in the identification device 18 pointed at by the remote control.

Naturally, if the remote control is inadvertently operated when it is not pointed towards any identification device 18, the code ID will be represented by a null code.

If an infrared directional technology is used, the query of an identification device 18 may be allowed in a visual angle of about +/- 4° and the maximum distance between the remote control 20 and the identification device 18 could be about 10-15 m.

Following the stage of acquisition of the identification code ID, a stage of validation of the -aforementioned code is performed,wherein the remote control checks whether the code ID acquired is valid or not. If it is null, a "code invalid" signal is issued, for example, by switching on a red LED or warning light on the remote control, and the command request is aborted. Otherwise, the identification code acquired is imported into the respective field of the frame T of the complex command signal CX.

The complex command signal CX also comprises a command code COM containing the code of the pressed key, which code represents the universal command selected via the user interface.

Lastly, the remote control acquires the fingerprint or other biometric characteristic (or similar access code) of the user, for example the print of the index finger positioned on the underside of the casing of the remote control while it is being held, and this data is imported into the complex command signal CX in the form of a code DX representing the pixel matrix acquired.

The complex command code also comprises an optional "timestamp" field TS indicating an identifying code (serial number) of the remote control and the event date/time, and a checksum field CS for checking purposes.

The complex command code CX is then encrypted, for example by applying a standard DES encryption algorithm, then a UDP packet is constructed, inserting the previously encrypted complex command code CX in the data field of the UDP packet, preceded by the source and destination address fields and followed by another checksum field. The UDP packet thus formed is transmitted over the second, radiofrequency, communication link L₂ employing the IP protocol, if necessary compressed using known techniques, and received by the management unit 12.

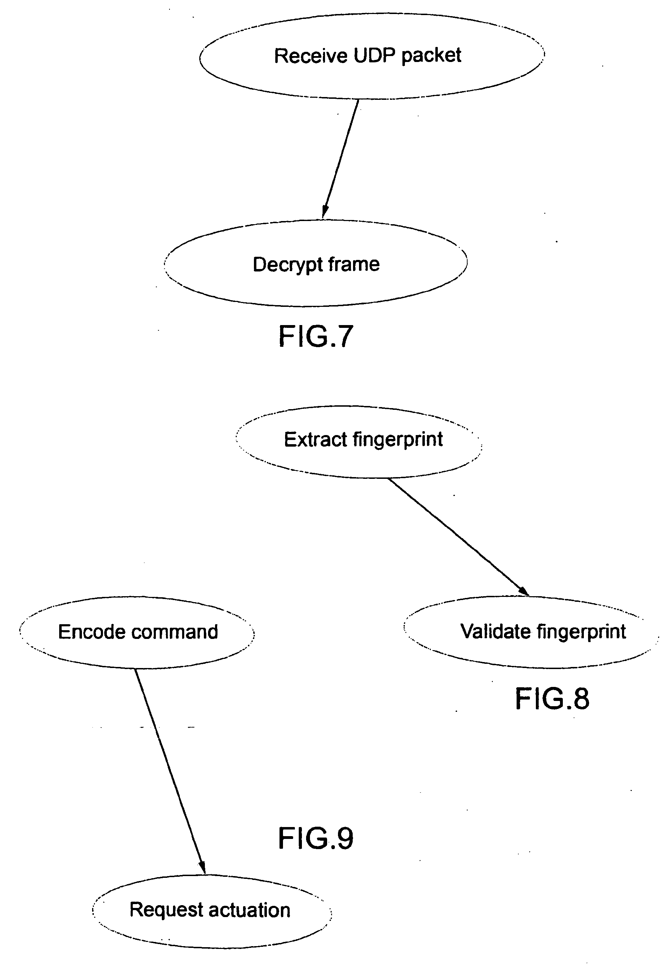

The management unit 12 performs the operations in reverse, illustrated in Figures 7-9, i.e. in sequence, after receiving a UDP packet, it decrypts the complex command signal CX present in its data field, and then it extracts the user recognition data DX and then compares it with the data stored in a data bank of authorized subjects.

Upon a positive comparison, the request is considered confirmed, and the remaining received data items comprising the "timestamp" TS, the identification code ID and the command code COM are forwarded to the next process. Otherwise, the request is rejected.

If the request is accepted the microprocessor unit of the management unit 12 determines the action to take based on the type of I/O device 14 to be controlled, identified by the identification code ID, and based on the command code COM indicating the command selected on the remote control interface.

The command to be executed on the selected I/O device is recognized according to a predetermined interpretation criterion stored in the memory module 34.

On the basis of the operation requested, the management unit 12 configures a temporary point-to-point communication channel through the interconnection matrix 30 between a pair of I/O devices of the environment, or authorizes the activation/deactivation of a selected I/O device through the network switching module 32.

Next, to further clarify the operation of the system, some example applications will be described.

### Entry phone call

It is possible, when the system is being configured, to predetermine which audio/video station (monitor, camera, microphone) to divert the entry phone call to. The system then comes into play through action of the interconnection matrix to route an entry phone call signal to the selected device via the remote control 20, in order to present the call to the user.

Following an incoming entry phone call event, for example signalled by the doorbell sound, it is possible to use the remote control to point to the identification device associated with the desired presentation device or equipment, for example a television monitor, then use the remote control buttons, for example the PREVIOUS/NEXT button pair, to change the input channel in order to be tuned into the channel that is preset to be connected to the entry phone system.

The nearest radiofrequency transmitter-receiver module 22 intercepts the complex command signal CX constructed by the remote control as explained above and forwards it to the management unit 12, which checks the configuration of the monitor, its state and, if this is appropriate for the PREVIOUS/NEXT request (for example, the monitor is on), changes the channel via the interconnection matrix.

The central management unit is arranged to save the communication settings of the destination channel if currently in use (for example television equipment that is operational and tuned into a transmission channel), then remains standing by for a. conversation-end event or one that indicates an elapsed response time, in order to recall the previously saved communication settings of the destination channel, substantially remapping the interconnection matrix to the previous configuration.

### Lighting control

To switch on one or more lights in a room in the environment, it is possible to press the ON key on the remote control, which is appropriately oriented towards the identification device of the abovementioned light.

Following this operation, the radiofrequency transmitter-receiver module 22 sends a "light event" information item to the central management unit 12, following which the management unit checks the configuration of the selected device, the state and, if appropriate for the "ON" request (i.e. it is currently off), it sends a "light switch-on" message to the light driver module 141 via the network switching module 32. The light driver module 141, upon receiving the command, executes the request.

Similarly the operation to switch off the light or perform a dimmer adjustment takes place only if the key on the remote control used is, respectively, the OFF key, or one of the PREVIOUS/NEXT key pair or the SLIDER key.

### TV/audio volume adjustment

This is achieved in a substantially similar manner to that of the lighting control.

To adjust the TV/audio volume, or other parameters, it is possible to press the SLIDER key on the remote control, which is appropriately oriented towards the identification device of the equipment to be controlled.

Following this operation the radiofrequency transmitter-receiver module 22 sends a "SLIDER event" information item to the central management unit 12, following which the management unit checks the configuration of the selected device, the state and, if appropriate for the "SLIDER" request, it sends an "audio adjustment" message to the audio module of the television equipment via the network switching module 32. The audio module of the television equipment, upon receiving the command, executes the request.

### TV channel (input) change

To change the input channel of a television monitor or equipment, it is possible to press the PREVIOUS/NEXT keys on the remote control, which is appropriately oriented towards the identification device of the equipment to be controlled.

Following this operation the radiofrequency transmitter-receiver module 22 sends a "PREVIOUS/NEXT event" information item to the central management unit 12, following which the management unit checks the configuration of the selected device, the state and, if appropriate for the "PREVIOUS/NEXT" request, it changes the input channel by acting on the interconnection matrix 30, interconnecting the television signal source and the preselected monitor 14f.

### TV channel (station) change

This functions in a similar manner to the previous case, when the UP/DOWN key on the remote control is pressed. Thus, the command for selecting another stored transmission channel is sent to an item of television equipment.

The system according to the invention exhibits a number of advantages during installation.

The identification device for one or more I/O devices distributed in the environment can be constructed as an item of furniture, so as to minimize the aesthetic impact in the environment, particularly with regard to the wiring of I/O devices in buildings of historical interest.

Advantageously, the system that is a subject of the invention also provides for achieving a maximum reduction in wiring, in radiofrequency emissions from remote control devices and in work required on walls to change the configuration of the distribution of devices in an environment.

It is also possible to use devices available on the market and then obtain, at relatively low cost, wiring designs specifically for buildings of historic interest, for the disabled, for offices or domestic environments, or for boat environments, without having to provide ad hoc connection solutions, hence ensuring that the system is as versatile as possible.

Furthermore, it is conceivable to set up the system according to the invention to control equipment distributed in many environments, for example in household rooms and neighbouring outside areas, such as gardens or other private properties (for controlling external lighting equipment, irrigation, etc.).

Conveniently, it is possible to provide a plurality of different data banks of authorized user subjects, relating to different environments in which the devices or equipment to be controlled are distributed.

In a different embodiment, the system can be integrated on board a vehicle, providing therein an onboard central management unit adapted to control devices on board the vehicle, which devices are linked for example to a CAN or LIN network.

Thus, for example, it is possible to make use of the same remote control used in a domestic environment in order to activate some cabin functions of the particular vehicle, for example opening/closing doors when the vehicle is parked in a garage, substantially making use of an extension of the domestic remote control system, without therefore having to look for and carry with oneself keys or other specific actioning devices.

Naturally, the principle of the invention remaining the same, the forms of embodiment and details of construction may be varied widely with respect to those described and illustrated purely by way of non-limiting example, without thereby departing from the scope of protection of the present invention, which scope of protection is defined by the appended claims.

## Claims

1. A remote control system for electrical and/or electronic equipment and devices which are distributed in an environment, in particular in a domestic environment, comprising in combination:
- at least one identification device (18) associated with an equipment or device (14), including means for storing an identification code (ID) assigned to said equipment or device (14), and means for transmitting the identification code (ID) over a first communication link (L₁);
- a universal remote control device (20) for the equipments or devices, comprising user interface means for setting commands to a selected equipment or device (14); and
- a central management unit (12) for the system, the unit being arranged to control the equipments or devices (14) according to a set-up command,
in which the remote control device (20) comprises means for selecting an equipment or device (14), including means for querying an identification device (18) and means for receiving the identification code (ID) of the queried device (18);
the remote control device (20) being arranged to send out a complex command signal (CX) to the central management unit (12) over a second communication link (L₂), the complex command signal (CX) comprising:
- the received identification code (ID) of the equipment or device (14); and
- a command code (COM) indicating one of a plurality of predetermined universal commands that can be selected by means of the user interface, and in which
the management unit (12) is adapted to generate an instruction specific to the equipment or device (14) that is recognized via the identification code (ID), on the basis of the received command code (COM), according to a predetermined command interpretation criterion.

2. A system according to Claim 1, in which the first communication link (L₁) is a directional communication link, and the second communication link (L₂) is an omnidirectional communication link.

3. A system according to any one of the preceding claims, in which the central management unit (12) comprises an interconnection matrix (30) adapted to place two equipments or devices (14) distributed in the environment in communication with each other by configuring a temporary point-to-point communication channel.

4. A system according to Claim 3, in which the management unit (12) is adapted to establish a plurality of point-to-point communication channels between two equipments or devices (14).

5. A system according to any one of the preceding claims, in which the central management unit (12) comprises a network switching module (32), adapted to selectively connect one or more electrical equipments or devices (14) distributed in the environment to a power supply network.

6. A system according to any one of the preceding claims, in which the central management unit (12) comprises programmable means for storing identification codes (ID) of equipments or devices (14) to be controlled, and associated interpretation criteria for the universal commands selected at the remote control device (20).

7. A system according to any one of the preceding claims, in which the remote control device (20) comprises means for authenticating a user subject, which means are adapted to acquire data (DX) for recognizing a user.

8. A system according to Claim 7, in which the complex command signal (CX) comprises the data (DX) for recognizing a user.

9. A system according to Claim 7, in which the authentication means comprise means for acquiring data representing biometric characteristics of the user, including data representing a fingerprint.

10. A system according to any one of the preceding claims, in which the remote control device (20) comprises means for the cryptographic encoding of a complex command signal (CX), the encrypting code being unique for each environment.

11. A system according to any one of the preceding claims, in which the remote control device (20) comprises keypad interface means, including at least one two-state control button, and at least two keys for the sequential selection in a list of available functions, in opposite scrolling directions.

12. A system according to Claim 7, in which the central management unit (12) is arranged to recognize an authorized user subject by comparing recognition data acquired by the remote control device (20) with predetermined stored data on authorized user subjects, the system comprising a plurality of different data bases on authorized user subjects, relating to different environments in which the equipment or devices (14) are distributed.

13. A system according to any one of the preceding claims, in which the central management unit (12) is installed in a domestic environment or similar closed environment in order to control equipment distributed in that environment and/or in neighbouring outside areas.

14. A system according to any one of the preceding claims, in which the identification devices (18) associated with each equipment or device (14) are bound to the respective equipment or device (14).

15. A system according to any one of the preceding claims, in which the identification devices (18) associated with each equipment or device (14) are remote from the respective equipment or device (14), and are arranged in areas of the environment that can be associated with or related to the associated equipment or device (14).

## Patentansprüche

1. Fernsteuerungssystem für elektrische und/oder elektronische Geräte und Vorrichtungen, die in einer Umgebung dezentral verteilt sind, im Besonderen in der Umgebung einer Wohnung, wobei das System in Kombination umfasst:
- zumindest eine Identifizierungseinrichtung (18), die einem Gerät oder einer Vorrichtung (14) zugeordnet ist, wobei sie eine Einrichtung, um einen Identifizierungscode (ID) zu speichern, der diesem Gerät oder dieser Vorrichtung (14) zugeordnet ist, sowie eine Einrichtung aufweist, um den Identifizierungscode (ID) über einen ersten Kommunikationslink (L₁) zu übertragen;
- eine allgemeine Fernsteuerungseinrichtung (20) für die Geräte oder Vorrichtungen, die eine Interfaceeinrichtung für den Benutzer umfasst, um Befehle an ein ausgewähltes Gerät oder eine Vorrichtung (14) abzugeben; und
- eine zentrale Managementeinheit (12) für das System, wobei die Einheit so aufgebaut ist, dass sie die Geräte oder Vorrichtungen (14) in Übereinstimmung mit einem angeordneten Befehl steuert,
wobei die Fernsteuerungseinrichtung (20) eine Einrichtung umfasst, um ein Gerät oder eine Vorrichtung (14) auszuwählen, und eine Einrichtung, um eine Identifizierungseinrichtung (18) abzufragen, sowie eine Einrichtung aufweist, um den Identifizierungscode (ID) der abgefragten Einrichtung (18) zu empfangen;
die Fernsteuerungseinrichtung (20) so aufgebaut ist, dass sie zur zentralen Managementeinheit (12) über einen zweiten Kommunikationslink (L₂) ein komplexes Befehlssignal (CX) aussendet, wobei das komplexe Befehlssignal (CX) umfasst:
- den empfangenen Identifizierungscode (ID) des Geräts oder der Vorrichtung (14); sowie
- einen Befehlscode (COM), der einen Befehl aus einer Vielzahl von vorbestimmten, allgemeinen Befehlen kennzeichnet, die mit Hilfe des Interface des Benutzers ausgewählt werden können, und wobei
die Managementeinheit (12) so aufgebaut ist, dass sie eine für das Gerät oder die Vorrichtung (14) spezifische Anweisung erzeugt, die über den Identifizierungscode (ID) aufgrund des empfangenen Befehlscodes (COM) in Übereinstimmung mit einem vorbestimmten Befehlsinterpretations-Kriterium erkannt wird.

2. System gemäß Anspruch 1, wobei der erste Kommunikationslink (L₁) ein gerichteter Kommunikationslink und der zweite Kommunikationslink (L₂) ein ungerichteter Kommunikationslink ist.

3. System gemäß irgendeinem der bisherigen Ansprüche, wobei die zentrale Managementeinheit (12) eine Verbindungsmatrix (30) umfasst, die so aufgebaut ist, dass sie zwei Geräte oder Vorrichtungen (14), die in der Umgebung dezentral verteilt sind, miteinander in Verbindung bringt, indem sie einen temporären Punkt-zu-Punkt-Kommunikationskanal aufbaut.

4. System gemäß Anspruch 3, wobei die Managementeinheit (12) so aufgebaut ist, dass sie eine Vielzahl von Punkt-zu-Punkt-Kommunikationskanälen zwischen zwei Geräten oder Vorrichtungen (14) errichtet.

5. System gemäß irgendeinem der bisherigen Ansprüche, wobei die zentrale Managementeinheit (12) ein Netzwerk-Schaltmodul (32) umfasst, das so aufgebaut ist, dass es wahlweise ein oder mehrere elektrische Geräte oder Vorrichtungen (14), die in der Umgebung dezentral verteilt sind, mit einem Stromnetz verbindet.

6. System gemäß irgendeinem der bisherigen Ansprüche, wobei die zentrale Managementeinheit (12) eine programmierbare Einrichtung, um Identifizierungscodes (ID) der Geräte oder Vorrichtungen (14) zu speichern, die gesteuert werden sollen, sowie zugeordnete Auswertungskriterien für die allgemeinen Befehle umfasst, die mit der Fernsteuerungseinrichtung (20) ausgewählt werden.

7. System gemäß irgendeinem der bisherigen Ansprüche, wobei die Fernsteuerungseinrichtung (20) eine Einrichtung umfasst, um eine Benutzerperson zu beglaubigen, wobei diese Einrichtung so aufgebaut ist, dass sie Daten (DX) erlangt, um einen Benutzer anzuerkennen.

8. System gemäß Anspruch 7, wobei das komplexe Befehlssignal (CX) die Daten (DX) für die Anerkennung eines Benutzers umfasst.

9. System gemäß Anspruch 7, wobei die Anerkennungseinrichtung eine Einrichtung umfasst, die Daten erlangt, die biometrische Merkmale des Benutzers darstellen, einschließlich Daten, die einen Fingerabdruck darstellen.

10. System gemäß irgendeinem der bisherigen Ansprüche, wobei die Fernsteuerungseinrichtung (20) eine Einrichtung umfasst, um ein komplexes Befehlssignal (CX) kryptographisch zu codieren, wobei der kryptographische Code für jede Umgebung eindeutig ist.

11. System gemäß irgendeinem der bisherigen Ansprüche, wobei die Fernsteuerungseinrichtung (20) eine Tastatur-Interfaceeinrichtung umfasst, die zumindest eine Steuertaste für zwei Zustände sowie zumindest zwei Tasten aufweist, um aus einer Liste von verfügbaren Funktionen **dadurch** eine sequenzielle Auswahl treffen zu können, dass ein Scrollen in entgegengesetzte Richtungen erfolgt.

12. System gemäß Anspruch 7, wobei die zentrale Managementeinheit (12) so aufgebaut ist, dass sie eine berechtigte Benutzerperson **dadurch** anerkennt, dass sie Anerkennungsdaten, die von der Fernsteuerungseinrichtung (20) erlangt wurden, mit vorbestimmten, gespeicherten Daten von berechtigten Benutzerpersonen vergleicht, wobei das System eine Vielzahl von unterschiedlichen Datenbanken von berechtigten Benutzerpersonen umfasst, die unterschiedliche Umgebungen betreffen, in denen die Geräte oder Vorrichtungen (14) dezentral verteilt sind.

13. System gemäß irgendeinem der bisherigen Ansprüche, wobei die zentrale Managementeinheit (12) in der Umgebung einer Wohnung oder einer ähnlichen abgeschlossenen Umgebung installiert ist, um ein Gerät zu steuern, das in dieser Umgebung und/oder in angrenzenden äußeren Bereichen dezentral verteilt ist.

14. System gemäß irgendeinem der bisherigen Ansprüche, wobei die Identifizierungseinrichtung (18), die jedem Gerät oder jeder Vorrichtung (14) zugeordnet ist, mit dem entsprechenden Gerät oder der Vorrichtung (14) verknüpft ist.

15. System gemäß irgendeinem der bisherigen Ansprüche, wobei die Identifizierungseinrichtungen (18), die jedem Gerät oder jeder Vorrichtung (14) zugeordnet sind, von dem entsprechenden Gerät oder der Vorrichtung (14) entfernt und in jenen Bereichen der Umgebung angeordnet sind, die dem zugeordneten Gerät oder der Vorrichtung (14) zugeordnet werden können oder mit diesen in Beziehung stehen.

## Revendications

1. Système de commande à distance pour des équipements et dispositifs électriques et/ou électroniques distribués dans un environnement, en particulier dans un environnement domestique, comprenant en combinaison :
- au moins un dispositif d'identification (18) associé à un équipement ou dispositif (14), comprenant des moyens pour stocker un code d'identification (ID) attribué au dit équipement ou dispositif (14) et des moyens pour transmettre le code d'identification (ID) sur une première liaison de communication (L₁) ;
- un dispositif de commande à distance universel (20) pour les équipements ou dispositifs, comprenant des moyens d'interface utilisateur pour donner des commandes à un équipement ou dispositif sélectionné (14) ; et
- une unité de gestion centrale (12) pour le système, l'unité étant disposée pour commander les équipements ou dispositifs (14) selon une commande de configuration,
dans lequel le dispositif de commande à distance (20) comprend des moyens pour sélectionner un équipement ou dispositif (14), comprenant des moyens pour interroger un dispositif d'identification (18) et des moyens pour recevoir le code d'identification (ID) du dispositif interrogé (18) ;
le dispositif de commande à distance (20) étant disposé pour envoyer un signal de commande complexe (CX) à l'unité de gestion centrale (12) sur une seconde liaison de communication (L₂), le signal de commande complexe (CX) comprenant :
- le code d'identification (ID) reçu de l'équipement ou dispositif (14) ; et
- un code de commande (COM) indiquant l'une d'une pluralité de commandes universelles prédéterminées qui peuvent être sélectionnées au moyen de l'interface utilisateur, et dans lequel
l'unité de gestion (12) est apte à générer une instruction spécifique à l'équipement ou dispositif (14) qui est reconnue par l'intermédiaire du code d'identification (ID), sur la base du code de commande (COM) reçu, selon un critère d'interprétation de commande prédéterminé.

2. Système selon la revendication 1, dans lequel la première liaison de communication (L₁) est une liaison de communication directionnelle, et la seconde liaison de communication (L₂) est une liaison de communication omnidirectionnelle.

3. Système selon l'une quelconque des revendications précédentes, dans lequel l'unité de gestion centrale (12) comprend une matrice d'interconnexion (30) apte à placer deux équipements ou dispositifs (14) distribués dans l'environnement en communication l'un avec l'autre en configurant une voie de communication de point à point temporaire.

4. Système selon la revendication 3, dans lequel l'unité de gestion (12) est apte à établir une pluralité de voies de communication de point à point entre deux équipements ou dispositifs (14).

5. Système selon l'une quelconque des revendications précédentes, dans lequel l'unité de gestion centrale (12) comprend un module de commutation de réseau (32), apte à connecter sélectivement un ou plusieurs équipements ou dispositifs électriques (14) distribués dans l'environnement à un réseau d'alimentation électrique.

6. Système selon l'une quelconque des revendications précédentes, dans lequel l'unité de gestion centrale (12) comprend des moyens programmables pour stocker des codes d'identification (ID) d'équipements ou de dispositifs (14) à commander, et des critères d'interprétation associés pour les commandes universelles sélectionnées au niveau du dispositif de commande à distance (20).

7. Système selon l'une quelconque des revendications précédentes, dans lequel le dispositif de commande à distance (20) comprend des moyens pour identifier un sujet utilisateur, lesdits moyens étant aptes à acquérir des données (DX) pour reconnaître un utilisateur.

8. Système selon la revendication 7, dans lequel le signal de commande complexe (CX) comprend les données (DX) pour reconnaître un utilisateur.

9. Système selon la revendication 7, dans lequel les moyens d'authentification comprennent des moyens pour acquérir des données représentant des caractéristiques biométriques de l'utilisateur, comprenant des données représentant une empreinte digitale.

10. Système selon l'une quelconque des revendications précédentes, dans lequel le dispositif de commande à distance (20) comprend des moyens pour le codage cryptographique d'un signal de commande complexe (CX), le code de cryptage étant unique pour chaque environnement.

11. Système selon l'une quelconque des revendications précédentes, dans lequel le dispositif de commande à distance (20) comprend des moyens d'interface de clavier, comprenant au moins un bouton de commande à deux états, et au moins deux touches pour la sélection séquentielle dans une liste de fonctions disponibles, dans des sens de défilement opposés.

12. Système selon la revendication 7, dans lequel l'unité de gestion centrale (12) est agencée pour reconnaître un sujet utilisateur autorisé en comparant des données de reconnaissance acquises par le dispositif de commande à distance (20) à des données stockées prédéterminées sur des sujets utilisateurs autorisés, le système comprenant une pluralité de bases de données différentes sur des sujets utilisateurs autorisés, concernant différents environnements dans lesquels les équipements ou dispositifs (14) sont distribués.

13. Système selon l'une quelconque des revendications précédentes, dans lequel l'unité de gestion centrale (12) est installée dans un environnement domestique ou dans un environnement clos similaire afin de commander les équipements distribués dans cet environnement et/ou dans des zones extérieures voisines.

14. Système selon l'une quelconque des revendications précédentes, dans lequel les dispositifs d'identification (18) associés à chaque équipement ou dispositif (14) sont liés à l'équipement ou au dispositif respectif (14).

15. Système selon l'une quelconque des revendications précédentes, dans lequel les dispositifs d'identification (18) associés à chaque équipement ou dispositif (14) sont distants de l'équipement ou du dispositif respectif (14), et sont disposés dans des zones de l'environnement qui peuvent être associées ou relatives à l'équipement associé ou au dispositif associé (14).
